# EUROPÄISCHE PATENTSCHRIFT

(11) **EP 1 270 966 B1**
(45) Veröffentlichungstag und Bekanntmachung des Hinweises auf die Patenterteilung: **16.11.2005**
(21) Anmeldenummer: 02010400.6
(22) Anmeldetag: 08.05.2002
(51) Int. Cl.: F16C 3/14

(54) **Kurbelwelle für eine Brennkraftmaschine**
Crankshaft for an internal combustion engine
Vilbrequin pour moteur à combustion

(30) Priorität: 22.06.2001 DE 10130196
(43) Veröffentlichungstag der Anmeldung: 02.01.2003
(73) Patentinhaber: Dr.Ing. h.c.F. Porsche Aktiengesellschaft, 70435 Stuttgart (DE)
(72) Erfinder: Hülsemann, Ulrich, 75242 Neuhausen (DE)

(56) Entgegenhaltungen:
- EP-A- 0 325 693
- DE-A- 2 347 101
- US-A- 3 405 959
- US-A- 5 865 070

## Beschreibung

Die Erfindung bezieht sich auf eine Kurbelwelle für eine Brennkraftmaschine mit einer Vorrichtung zur Einspeisung von Schmieröl nach dem Oberbegriff des Patentanspruchs 1.

Eine bekannte in eine Brennkraftmaschine eingebaute Kurbelwelle, DE 844 370, ist über ihre Länge mit einem Hohlraum versehen, der an einen Schmierölkreislauf dieser Brennkraftmaschine angeschlossen ist. Das umlaufende Medium des Schmierölkreislaufs tritt über eine Vorrichtung an einer ersten Stirnseite der Kurbelwelle in den Hohlraum ein und benachbart einer zweiten Stirnseite von ihr wieder durch eine Bohrung aus besagtem Hohlraum aus und gelangt dann in eine Ölwanne der Brennkraftmaschine.

Aus der DE 23 47 101 geht eine Kurbelwelle eines Hubkolben-Kompressors hervor, die an einer Stirnseite mit einer Vorrichtung versehen ist, mittels der Schmiermittel eingespeist wird. Die Kurbelwelle ist mit einem ringförmigen Ansatz versehen, der in eine Bohrung der Vorrichtung eingreift. Zwischen Ansatz und Bohrung ist ein Gleitring und eine Ringfeder zur Abdichtung der Vorrichtung gegenüber der Kurbelwelle vorgesehen.

Aufgabe der Erfindung ist es eine Vorrichtung zur Einspeisung von Schmieröl in eine Kurbelwelle einer Brennkraftmaschine so zu gestalten, dass sie bei einfacher Konstruktion hohen Schmierölsystemdrücken und Drehzahlen der Kurbelwelle standhält.

Erfindungsgemäß wird diese Aufgabe durch die Merkmale des Patentanspruchs 1 gelöst. Weitere die Erfindung ausgestaltende Merkmale sind in den Unteransprüchen enthalten.

Die mit der Erfindung hauptsächlich erzielten Vorteile sind darin zu sehen, dass die Vorrichtung ein übersichtlich konzipiertes und leicht herstellbares Leitungsgehäuse umfasst, das das Schmieröl unter Vermittlung des in die axiale Bohrung der Kurbelwelle hineinragenden Rohrabschnitts zielgerichtet einspeist. Dabei wirkt der Rohrabschnitt mit der Bohrung mittels einer radialen Dichteinrichtung zusammen, die sowohl relativ hohe Schmierölsystemdrücke standhält wie auch bezüglich einem entsprechenden Drehzahlniveau unempfindlich ist. Das Leitungsgehäuse ist an eine Ölzulaufbohrung im Kurbelgehäuse angeschlossen, so dass externe Ölleitungen entfallen können. Schließlich ist das Leitungsgehäuse durch die Anordnung an einer Außenseite einer Stirnwand des Kurbelgehäuses, dem Fixierungskragen sowie den Schrauben leicht zu montieren.

In der Zeichnung wird ein Ausführungsbeispiel der Erfindung gezeigt, das nachstehend näher beschrieben ist.

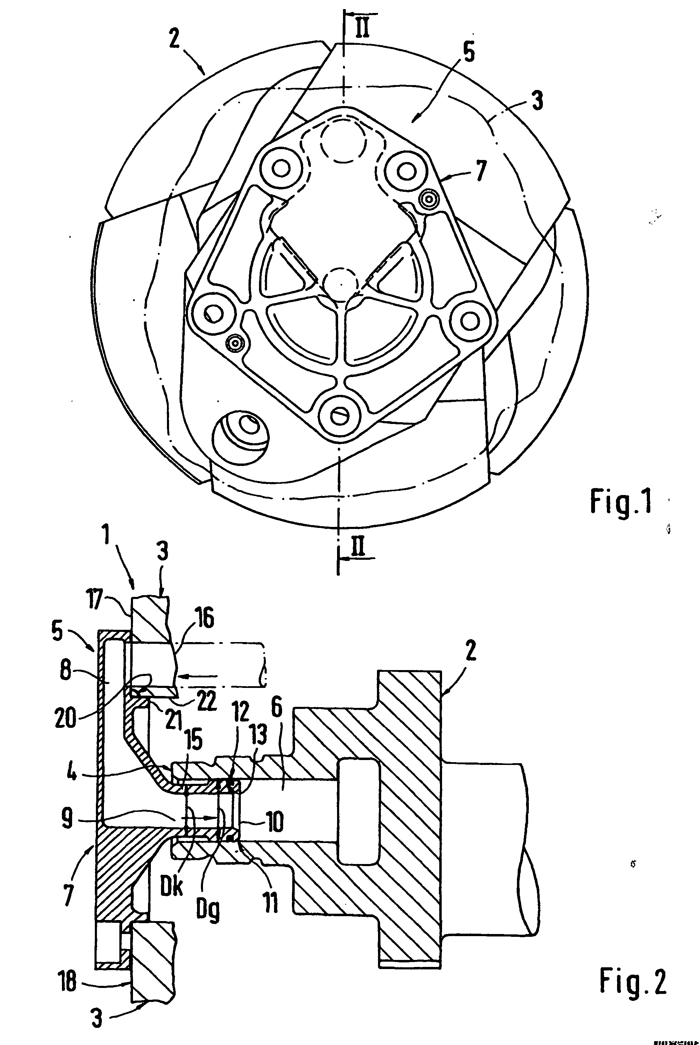

Es zeigen
- Fig. 1: Teilansicht eine Stirnseite einer Brennkraftmaschine,
- Fig. 2: einen Schnitt nach der Linie II-II der Fig.1.

Eine Brennkraftmaschine 1 der Hubkolbengattung ist mit einer Kurbelwelle 2 versehen, die in einem Kurbelgehäuse 3 gelagert und mit einem oder mehreren in Zylindern beweglichen Kolben gekoppelt ist. An einer Stirnseite 4 der Kurbelwelle 2 ist eine Vorrichtung 5 zur Einspeisung von Schmieröl, das für definierte Lagestellen der Brennkraftmaschine bestimmt ist, vorgesehen. Die Vorrichtung 5 leitet hierzu das Schmieröl in eine axiale Bohrung 6 der Kurbelwelle ein, von wo es zu besagten Lagerstellen gelangt.

Die Vorrichtung 5 ist ein aus Kunststoff oder Metall bestehendes Leitungsgehäuse 7, das Leitungsabschnitte 8,9 aufweist und mittels eines aus einem Stück mit dem Leitungsgehäuse 7 hergestellten Rohrabschnitts 10 in die axiale Bohrung 6 der Kurbelwelle 2 hineinragt; die Länge des Rohrabschnitts 10, der innerhalb der Bohrung 6 verläuft, wird rechnerisch oder iterativ ermittelt. Zwischen dem Rohrabschnitt 10 und der Bohrung 6 ist eine radiale Dichteinrichtung 11 angeordnet, die einen ringförmigen Dichtkörper 12 umfasst, wobei der Dichtkörper 12 in einer Ringnute 13 des Rohrabschnitts 10 nach Art eines Kolbenrings gehalten ist. Darüber hinaus weist der Rohrabschnitt 10 unterschiedliche Durchmesser auf. So ist der Durchmesser Dg im Bereich 14 der Dichteinrichtung 11 größer als der Durchmesser Dk im übrigen Bereich 15 des Rohrabschnitts 10. -

Das Leitungsgehäuse 6 bzw. sein Leitungsabschnitt 8 sind an eine Ölzulaufbohrung 16 des Kurbelgehäuses 3 angeschlossen d.h. die Ölzulaufbohrung 16 ist in das Kurbelgehäuse 3 integriert. Außerdem ist das Leitungsgehäuse 7 an einer Außenseite 17 einer Stirnwand 18 des Kurbelgehäuses 3 angebaut und unter Vermittlung von ein oder mehrerer Schrauben 19 am besagten Kurbelgehäuse 3 in Lage gehalten. Außerdem ist das Leitungsgehäuse 7 auf einer der Stirnwand 18 des Kurbelgehäuses 2 zugekehrten Seite 20 mit einem ringförmigen Fixierungskragen 21 versehen, der in eine korrespondierende Fixierungsbohrung 22 des Kurbelgehäuses 3 eingreift.

## Patentansprüche

1. Kurbelwelle für eine Brennkraftmaschine mit einer Vorrichtung zur Einspeisung von Schmieröl, welche Vorrichtung an einer Stirnseite der von einem Kurbelgehäuse umgebenen Kurbelwelle angeordnet ist, das Schmieröl in eine axiale Bohrung der Kurbelwelle einleitet und mittels einer Dichteinrichtung mit der Kurbelwelle zusammenwirkt, **dadurch gekennzeichnet, dass** die Vorrichtung (5) ein an dem Kurbelgehäuse (2) gehaltenes Leitungsgehäuse (9) umfasst, das mittels eines Rohrabschnitts (10) in die axiale Bohrung (6) der Kurbelwelle (2) hineinragt, wobei die Dichteinrichtung (11) zwischen dem Rohrabschnitt (10) und der Bohrung (6) wirksam ist.

2. Kurbelwelle nach Anspruch 1, **dadurch gekennzeichnet, dass** der Rohrabschnitt (10) und die Bohrung (6) über eine radiale Dichteinrichtung (11) zusammenwirken.

3. Kurbelwelle nach Anspruch 2, **dadurch gekennzeichnet, dass** der Durchmesser (Dg) des Rohrabschnitts (10) im Bereich der Dichteinrichtung (11) größer ist als der Durchmesser (Dk) in einem übrigen Bereich (10) des Rohrabschnitts (11).

4. Kurbelwelle nach Anspruch 3, **dadurch gekennzeichnet, dass** die Dichteinrichtung (11) einen ringförmigen Dichtkörper (12) umfasst, der beispielsweise in einer Ringnute (13) des Rohrabschnitts (10) gehalten ist.

5. Kurbelwelle nach einem oder mehreren der vorangehenden Ansprüche, **dadurch gekennzeichnet, dass** das Leitungsgehäuse (7) an eine Ölzulaufbohrung (16) des Kurbelgehäuses (2) angeschlossen ist.

6. Kurbelwelle nach Anspruch 1, **dadurch gekennzeichnet, dass** das Leitungsgehäuse (7) an einer Außenseite (17) einer Stirnwand (18) des Kurbelgehäuses (2) angebracht ist.

7. Kurbelwelle nach Anspruch 6, **dadurch gekennzeichnet, dass** das Leitungsgehäuse (7) unter Vermittlung einer oder mehrerer Schrauben (19) mit dem Kurbelgehäuse (2) verbunden ist.

8. Kurbelwelle nach einem oder mehreren der vorangehenden Ansprüche, **dadurch gekennzeichnet, dass** das Leitungsgehäuse (7) auf einer der Stirnwand (18) des Kurbelgehäuses (2) zugekehrten Seite (20) eine Fixierungskragen (21) aufweist, der in eine korrespondierende Fixierungsbohrung (22) des Kurbelgehäuses (2) hineinragt.

## Claims

1. A crankshaft for an internal-combustion engine, with an apparatus for feeding in lubricating oil, which apparatus is arranged on an end face of the crankshaft surrounded by a crankcase, introduces the lubricating oil into an axial bore in the crankshaft and cooperates with the crankshaft by means of a sealing device, **characterized in that** the apparatus (5) comprises a line housing (9) which is held on the crankcase (2) and which projects into the axial bore (6) in the crankshaft (2) by means of a tube portion (10), wherein the sealing device (11) is effective between the tube portion (10) and the bore (6).

2. A crankshaft according to Claim 1, **characterized in that** the tube portion (10) and the bore (6) co-operate by way of a radial sealing device (11).

3. A crankshaft according to Claim 2, **characterized in that** the diameter **(Dg)** of the tube portion (10) in the region of the sealing device (11) is larger than the diameter **(Dk)** in a remaining region (10) [*sic - recte* (15)] of the tube portion (11) [*sic - recte* (10)].

4. A crankshaft according to Claim 3, **characterized in that** the sealing device (11) has an annular sealing member (12) which is held for example in an annular groove (13) in the tube portion (10).

5. A crankshaft according to one or more of the preceding Claims, **characterized in that** the line housing (7) adjoins an oil-supply bore (16) of the crankcase (2).

6. A crankshaft according to Claim 1, **characterized in that** the line housing (7) is attached to an outer side (17) of an end wall (18) of the crankcase (2).

7. A crankshaft according to Claim 6, **characterized in that** the line housing (7) is connected to the crankcase (2) by means of one or more bolts (19).

8. A crankshaft according to one or more of the preceding Claims, **characterized in that**, on a side (20) facing the end wall (18) of the crankcase (2), the line housing (7) has a fixing collar (21) which projects into a corresponding fixing bore (22) in the crankcase (2).

## Revendications

1. Vilebrequin pour un moteur à combustion interne, comportant un dispositif d'alimentation en huile de lubrification, lequel dispositif est agencé sur une face frontale du vilebrequin entouré par un carter, introduit l'huile de lubrification dans une forure axiale du vilebrequin et coopère avec le vilebrequin au moyen d'une garniture d'étanchéité, **caractérisé en ce que** le dispositif (5) comporte un corps de conduite (7), qui est maintenu contre le carter de vilebrequin (2) et qui s'engage avec une portion de tube (10) dans la forure (6) axiale du vilebrequin (2), la garniture d'étanchéité (11) agissant entre la portion de tube (10) et la forure (6).

2. Vilebrequin selon la revendication 1, **caractérisé en ce que** la portion de tube (10) et la forure (6) coopèrent par l'intermédiaire d'une garniture d'étanchéité (11) radiale.

3. Vilebrequin selon la revendication 2, **caractérisé en ce que** le diamètre (Dg) de la portion de tube (10) dans la zone de la garniture d'étanchéité (11) est plus grand que le diamètre (Dk) dans une autre zone (10) de la portion de tube (10).

4. Vilebrequin selon la revendication 3, **caractérisé en ce que** la garniture d'étanchéité (11) est formée par un corps d'étanchéité (12) qui est maintenu par exemple dans une rainure annulaire (13) de la portion de tube (10).

5. Vilebrequin selon une ou plusieurs des revendications précédentes, **caractérisé en ce que** le corps de conduite (7) est raccordé à un orifice d'admission d'huile (16) du carter de vilebrequin (2).

6. Vilebrequin selon la revendication 1, **caractérisé en ce que** le corps de conduite (7) est agencé sur une face extérieure (17) d'une paroi frontale (18) du carter de vilebrequin (2).

7. Vilebrequin selon la revendication 6, **caractérisé en ce que** le corps de conduite (7) est assemblé au carter de vilebrequin (2) au moyen d'une ou de plusieurs vis (19).

8. Vilebrequin selon une ou plusieurs des revendications précédentes, **caractérisé en ce que** le corps de conduite (7), sur la face (20) orientée vers la paroi frontale (18) du carter de vilebrequin (2), comporte une collerette de fixation (21) qui s'engage dans une forure de fixation (22) correspondante dans le carter de vilebrequin (2).
